(19) Europäisches Patentamt
European Patent Office
Office européen des brevets

(11) **EP 1 905 020 B1**

(12) **EUROPEAN PATENT SPECIFICATION**

(45) Date of publication and mention
of the grant of the patent:
**29.04.2009 Bulletin 2009/18**

(51) Int Cl.:
***G11B 7/09*** *(2006.01)*

(21) Application number: **06765934.2**

(22) Date of filing: **28.06.2006**

(86) International application number:
**PCT/IB2006/052162**

(87) International publication number:
**WO 2007/004144 (11.01.2007 Gazette 2007/02)**

(54) **OPTICAL PICK-UP AND/OR RECORDING DEVICE**

OPTISCHE AUFNAHME- UND/ODER AUFZEICHNUNGSVORRICHTUNG

DISPOSITIF OPTIQUE DE SAISIE ET/OU D'ENREGISTREMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.07.2005 EP 05106042**

(43) Date of publication of application:
**02.04.2008 Bulletin 2008/14**

(73) Proprietor: **Koninklijke Philips Electronics N.V.**
**5621 BA Eindhoven (NL)**

(72) Inventors:
• **VERSCHUREN, Coen, A.**
**NL-5656 AA Eindhoven (NL)**

• **ZIJP, Ferry**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**EP-A2- 1 067 536          WO-A-99/18568**
**WO-A-20/06061757          WO-A2-99/49460**
**US-A- 6 041 031          US-A1- 2002 163 869**

## Description

FIELD OF THE INVENTION

The present invention relates to an optical head for a near field optical storage system and to an optical pick-up and/or recording device. More particularly, the present Invention relates to an optical head and an optical pick-up and/or recording device for two-dimensional optical data storage.

BACKGROUND OF THE INVENTION

State of the art document Optical Data Storage 2004, F. Zijp et al., Proceedings of SPIE Vol. 5380, pp. 209 to 223, describes a near field system. Thereby, a near field read-out of a 50 GB first-surface disc with a very high numerical aperture of 1.9 is proposed. The known near field system comprises a moving mechanism adapted to vary a distance between a front surface of a solid immersion lens and a surface of an optical disc. Thereby, for read-out operations the solid immersion lens is positioned at a constant distance that lies within the evanescent decay distance of a part of the focused electromagnetic field, typically less than 10 percent of the wavelength of the laser beam. In the known system, this distance is about 25 nm. To allow an air gap control with a mechanical actuator at such small distances, a gap error signal is obtained from the reflected light with a polarization state perpendicular to that of the main beam that is focused on the disc.

The near field system known has the disadvantage that an alignment of the lens with respect to the surface of the disc requires a tedious trial-and-error method. This requires a lot of effort and time involved.

Document EP 1 067 536 A2 discloses an optical pick-up for such a near field system.

SUMMARY OF THE INVENTION

It is an object of the invention to provide an optical pick-up and/or recording device for a near field optical storage system with an improved efficiency, especially with an improved performance for reading and/or writing of data.

This object is solved by an optical pick-up and/or recording device as defined in claim 1, Advantageous developments of the invention are mentioned in the dependent claims.

It is to be noted that the storage medium is not necessarily a part of the optical pick-up and/or recording device as claimed. The optical pick-up and/or recording device can be sold without a storage medium. Further, a storage medium can be temporarily used or different storage media can be used together with the optical pick-up and/or recording device.

The present invention has the advantage that reading and/or writing operations can be performed with a high reliability, even if different alignments are necessary for individual discs, or an alignment needs to be performed for each disc automatically at least once or dynamically during operation. Thereby, the moving mechanism may tilt the lens element such that the optical axis of the lens element is not parallel to that of the radiation beam. This has an effect on the gap signal, and this effect is corrected by the gap signal correcting unit. Hence, the performance of reading and/or writing operations is increased and the reliability of the optical pick-up and/or recording device is high.

The measure as defined in claim 5 has the advantage that the intensity of the component detected to derive the read-out signal for data processing is increased. Thereby, compared with the measure as defined in claim 5, an alternative way to obtain an identical gap signal is by changing the polarization from the linear state as emitted by the laser element to a circular state by passing the radiation beam through a quarter wave plate. This beam is then used to illuminate the lens. Subsequently, a part of the reflected beam is detected with a polarization state parallel to that of the initial polarization state of the laser element, after passing the reflected beam through the same or a further quarter wave plate.

The measure as defined in claim 7 has the advantage that the gap signal is corrected with respect to a suppression of the reflected radiation beam caused by an inclination of the optical axis of the lens element with respect to the direction of propagation of the radiation beam. Therefore, a detrimental effect on the gap signal is at least nearly neutralized by the amplification of the gap signal. Then, the corrected gap signal can be applied to the gap control unit controlling the moving mechanism.

The measure as defined in claim 8 has the advantage that the operation of the gap control unit is adapted by adjusting one or more preset values. According to the measure as defined in claims 9 and 10 a set point and a gain value of said gap control unit are adapted for adjustment.

According to the measures as defined in claims 11 and 12 the gain factor can be described as a one-dimensional or two-dimensional function (mapping). This function can be a discrete mapping, especially with respect to regularly arranged points. These points correspond to predetermined inclinations according to the measure as defined in claim 13.

A gap signal based on frustrated total internal reflection in the lens element is at least nearly a maximum, when the lens element is positioned out of the evanescent decay distance. Hence, it is advantageous that the optical head is adapted to determine the gain factors for predetermined inclinations according to the measure as defined in claim 14.

These and other aspects of the invention will be apparent from and elucidated with reference to the embodiments described hereinafter.

BRIEF DESCRIPTION OF THE DRAWINGS

The present invention will become readily understood from the following description of preferred embodiments thereof made with reference to the accompanying drawings, in which like parts are designated by like reference signs and in which:

Fig. 1 shows an optical pick-up and/or recording device according to a first embodiment of the present invention;

Fig. 2 shows a graph illustrating the amplitude of the gap signal in dependence of an air gap size;

Fig. 3 shows a graph illustrating a maximum amplitude of the gap signal in dependence of an angle of inclination of a front surface of the lens element relative to a direction of propagation of the radiation beam; and

Fig. 4 shows an optical pick-up and/or recording device according to a second embodiment of the present invention.

DESCRIPTION OF THE PREFERRED EMBODIMENTS

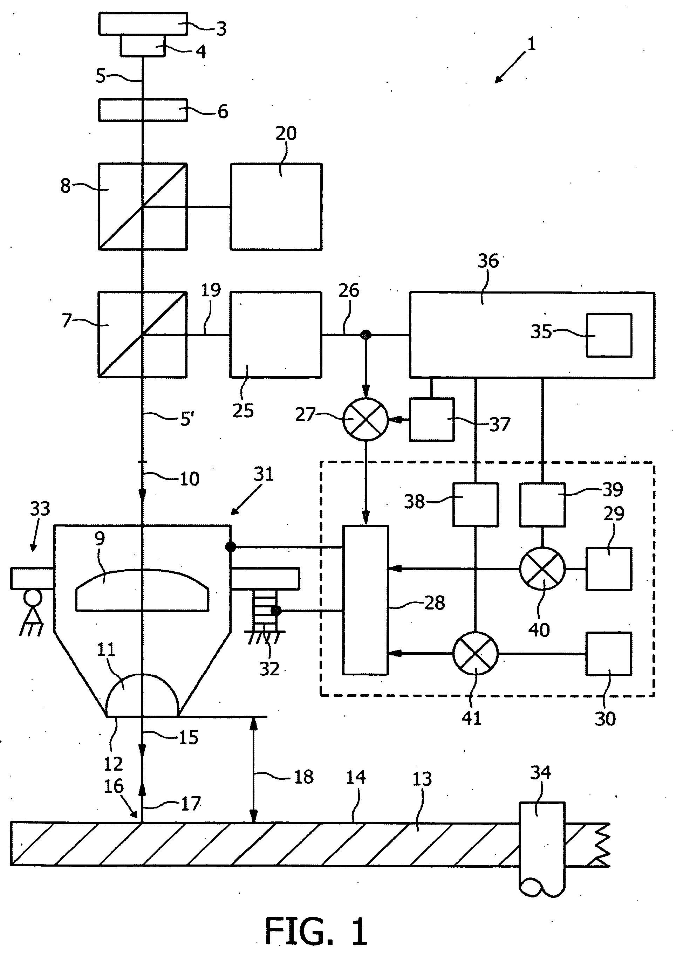

Fig. 1 shows an optical pick-up and/or recording device 1 according to a first embodiment of the invention. The optical pick-up and/or recording device 1 according to the first embodiment of the invention comprises an optical head. It may be possible that some elements of the optical pick-up and/or recording device 1 as claimed are not located on the optical head, but somewhere else in the optical storage system, for example at a main board.

The optical pick-up and/or recording device 1 can be used in an optical storage system, especially for two-dimensional optical data storage and three-dimensional holographic storage. The optical storage system can use a two-dimensional optical data storage disk, a storage medium for holographic storage or another optical storage medium. But, the optical head and the optical pick-up and/or recording device 1 are not limited to this mentioned data storage systems and can also be used in other applications.

The optical pick-up and/or recording device 1, as shown in Fig. 1, comprises a radiation emitting element 3. The radiation emitting element 3 comprises a semiconductor laser 4 and can comprise further elements such as lenses. The radiation emitting element 3 is emitting a radiation beam 5. The radiation beam 5 can comprise an elliptical beam profile with an aspect ratio of 1 to 3 or 2 to 3. The radiation beam 5 is input to a beam shaper element 6 for shaping the radiation beam 5 emitted from the radiation emitting element 3 in a radiation beam 5 with a more circular beam profile. Hence, the radiation beam 5 output from the beam shaper element 6 has an aspect ratio of at least nearly 1. The beam shaper element 6 can comprise further elements such as a collimating element to collimate the radiation beam 5 and to create a specific intensity profile of the radiation beam 5. For example, the collimating element of the beam shaper 6 can shape the radiation beam 5 in a radiation beam 5 having an at least nearly flat intensity profile.

The radiation beam output from the beam shaper element 6 is then input to a non-polarizing beam splitter 8. Further, the radiation beam 5 passes through a polarizing beam splitter 7 and propagates towards a converging lens 9 in a direction shown by a unitary vector 10 of radiation beam 5 propagation. Therefore, the vector 10 is defined by the radiation beam 5 propagating towards the converging lens 9. After passing through the converging lens 9 the radiation beam 5 propagates towards a lens element 11. As shown in Fig. 1, the lens element 11 is a hemispherical solid immersion lens 11. But, the lens element 11 can also be or comprise an aplanatic super-hemispherical solid immersion lens or a solid immersion lens formed in another way, or a device with a numerical aperture larger than 1, especially a solid immersion mirror.

The lens element 11 comprises a front surface 12 directed towards a surface 14 of a storage medium 13. The front surface 12 of the lens element 11 is at least nearly flat in the area around the focused beam, and an orientation of the front surface 12 is defined by a unitary lens surface vector 15. More particularly, the front surface 12 of the lens element 11 has a conical shape with a very small flat tip. The surface 14 of the storage medium 13 is at least nearly flat and its orientation is defined by a unitary disc surface vector 17. More particularly, the disc surface vector 17 is defined by the orientation of the surface 14 in the area 16 opposing the front surface 12 of the lens element 11, when the surface 14 is wavy. An optical axis of the lens element 11 is parallel to the vector 15.

For pick-up and recording operations the optical pick-up and/or recording device 1 operates in a mode known as frustrated total internal reflection (FTIR). Therefore, a distance 18 between the front surface 12 of the lens element 11 and the surface 14 of the storage medium 13 lies within the evanescent decay distance, which is typically less than 10 percent of the wavelength of the radiation beam 5. For example, the distance 18 is then of the order of 10 nm, especially 25 nm. It is to be noted that the lens element 11 has a very high numerical aperture. This numerical aperture is greater than 1 and can, for example, lie within a range from 1.5 to 1.9. The radiation beam 5 is not necessarily focused exactly onto the surface 14 of the storage medium 13. For example, the storage medium 13 can comprise one or more layers arranged under the surface 14 of the storage medium 13. The lens arrangement is moveable in a direction defined by the lens surface vector 15 for focus adjustment.

At least a part of the radiation beam 5 becomes elliptically polarized after reflection at the described interfaces between the lens element 11, the surface 14 of the storage medium 13 and the air gap between. This reflected radiation beam 5' propagating against the direction defined by unitary vector 10 is split up by the polarizing beam splitter 7. Thereby, the polarizing beam splitter 7 is arranged to split up the reflected radiation beam 5' in a component 19 with a polarization state perpendicular to that of the radiation beam 5 that illuminates the lens element 11. A part of the other component of the reflected radiation beam 5' with a polarization state parallel to that of the radiation beam 5 is directed to a data processing unit 20 by means of the non-polarizing beam splitter 8. The data processing unit 20 is arranged for analyzing the component of the reflected radiation beam 5' with parallel polarization and to output a data signal containing the data read-out from the storage medium 13.

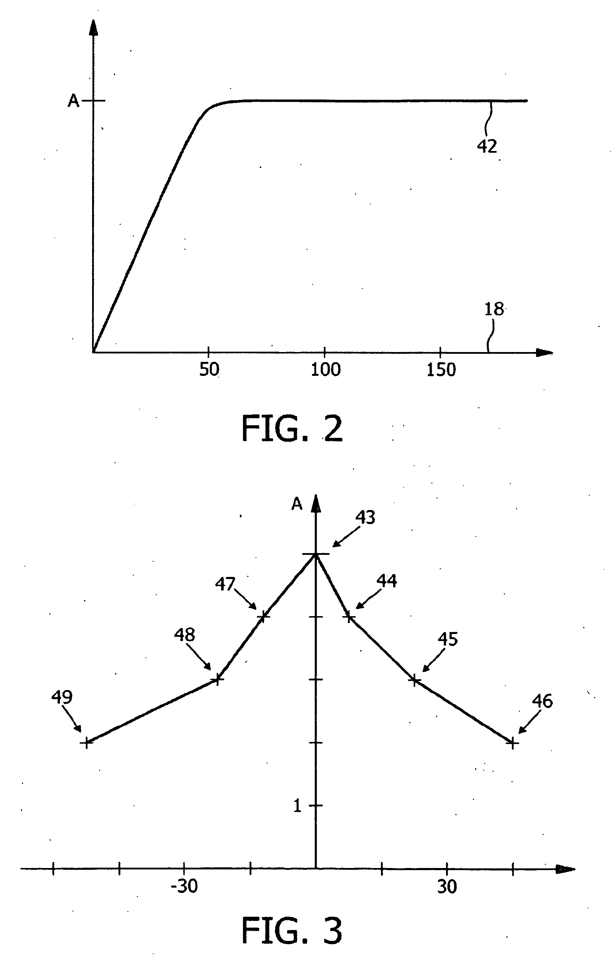

The component 19 is input to a gap measuring unit 25. The gap measuring unit 25 analyzes the component 19 of perpendicular polarization and outputs an electrical gap signal over a line 26. Thereby, the gap measuring unit 25 can measure an intensity of the component 19. The gap signal is generated from the low frequency part, for example 0 to 100 kHz, of the reflected radiation beam 5' with a polarization state perpendicular to that of the main radiation beam 5 that is focused on the optical storage medium 13. The amplitude of the component 19 of the reflected radiation beam 5' depends on the distance 18, as described in further detail with reference to Fig. 2.

The gap signal passes through an amplifier 27 and is input to a gap control unit 28. The control characteristic of the gap control unit 28 is preset and can be adjusted by a set point stored in a memory 29 and a gain value stored in a memory 30. The gap control unit 28 is connected with a moving mechanism 31 and especially an actuator element 32 of the moving mechanism 31. The moving mechanism 31 is adapted to vary the distance 18 by moving the lens element 11 and the converging lens 9 in or against the direction defined by vector 15. Alternatively or in addition, the moving mechanism 31 can also move the storage medium 13 in or against a direction defined by the vector 17. Further, the moving mechanism 31 provides a tilt mechanism 33 to vary an inclination of the front surface 12 of the lens element 11 relative to the surface 14 of the storage medium 13 in at least one direction. Alternatively or in addition, a tilt mechanism can be applied with respect to a rotating shaft 34 to tilt the storage medium 13 in at least one direction.

Hence, the moving mechanism 31 can vary the orientation of the unitary lens surface vector 15 and/or the orientation of the disc surface vector 17. A parallel orientation of vectors 15, 17 is necessary for a reliable operation. Hence, before or during operation the vectors 15, 17 are at least once orientated in parallel. That means that the front surface 12 is orientated parallel to the surface 14.

The achieved inclination of the front surface 12 of the lens element 11 relative to the surface 14 of the storage medium 13 is detected by measurement or calculated from the control signals output from the gap control unit 28 with respect to an initial position of the lens element 11 and the rotating shaft 34. This inclination can be described by a first tilt angle and a second tilt angle, or, as an approximation, only by a single tilt angle. It is to be noted that it is advantageous but not necessary that the tilt angles are defined with respect to directions which are perpendicular to each other. Further, it is to be noted that the tilt angles can vary, especially when the surface 14 is wavy. The actual values of the tilt angles are stored in a memory 35 of a gap signal correcting unit 36.

During the operation of the optical pick-up and/or recording device 1 the unitary lens surface vector 15 is, generally, not parallel to the unitary vector 10. That means that the optical axis of the lens element 11 defined by the vector 15 is inclined with respect to the vector 10. Thereby, the tilt mechanism 33 of the moving mechanism 31 may tilt the lens element 11 such that this has a detrimental effect on the gap signal. The magnitude of the gap signal decreases significantly with increasing tilt of the lens element 11 with respect to the direction of the propagation of the radiation beam 5 defined by vector 10. This creates a problem for the gap control unit 28 that uses the gap signal during the air gap control, when the lens is tilted. The effect of this decrease of the magnitude of the gap signal during the lens tilting would be an increase of the air gap due to the operation of the gap control unit 28 at a fixed set-point on the gap signal curve. A second effect of a reduction of the magnitude of the gap signal would be a decrease of the steepness of the linear part of the gap signal. This would lead to a reduction of the loop gain of the gap control unit 28 and thus a larger residual air gap error.

The gap signal correcting unit 36 determines a gain factor in dependence of the tilt angles stored in the memory 35 and outputs this gain factor to a memory 37. For example; when the tilt angles are both vanishing, then the gain factor stored in the memory 37 is 1. But, when at least one of the tilt angles has a non-vanishing number, then the gain factor stored in the memory 37 is greater than 1. The amplifier 27 then amplifies the gap signal input over line 26 with respect to the gain factor stored in memory 37 and outputs the corrected (amplified) gap signal to the gap control unit 28. Hence, the gap control unit 28 performs a correct control of the distance 18 so that the reliability of the operation of the optical pick-up and/or recording device 1 during the pick-up operation is high.

The gap signal correcting unit 36 can also store 1 in the memory 37 and store the gain factor determined in a memory 38 and a memory 39. Then, the gap signal output from the gap measuring unit 25 is transmitted to the gap control unit 28 as it is, that means uncorrected. In this case, a multiplier element 40 multiplies the set point value stored in the memory 29 with the gain factor stored in the memory 39 and outputs the result of this multiplication as a corrected set point to the gap control unit 28. Further, a multiplier element 41 multiplies the gain value stored in the memory 30 with a reciprocal value of the gain factor stored in the memory 38 and outputs the result of this multiplication as a corrected gain value to the gap control unit 28. Therewith, the preset values of the gap control unit 28 are adapted and the gap control unit 28 operates with this adapted preset values. Hence, the control of the distance 18 is improved.

It is to be noted that a combination of the described ways of correction is possible. Thereby, the gap signal can be corrected in part and the other part of the correction can be achieved by correcting the set point and gain value with non-unitary multipliers.

Also, it is to be noted that the optical pick-up and/or recording device 1 can be limited to one of the described ways of correction. In such a case, the elements not necessary for the correction can be omitted.

Fig. 2 shows a graph illustrating the dependence of an amplitude (magnitude) of the gap signal in dependence of the distance 18. Thereby, the distance 18 is shown on the horizontal axis and the amplitude of the gap signal is shown on the vertical axis. As an example, but not limiting the present invention, the distance 18 is shown in units of nanometers. In the shown example, starting with a distance 18 of (nearly) 0 nm, the amplitude of the gap signal, as shown by the line 42, increases at least nearly linear until it reaches the maximum amplitude A.

This maximum amplitude A is reached for a specific distance 18. The distance at which the maximum amplitude A is reached, depends on the numerical aperture and the wavelength of the radiation beam 5. In this example, the maximum amplitude is reached for a distance 18 of nearly 50 nm, while the numerical aperture is 1.9 and the wavelength of the radiation beam 5 is 405 nm.

When the distance 18 further advances, the amplitude of the gap signal is at least nearly constant and stays at the maximum amplitude A.

Fig. 3 shows a graph illustrating the dependence of the maximum amplitude A from an inclination of the front surface 12 of the lens element 11 relative to the direction of propagation of the radiation beam 5, that is the inclination between vectors 10, 15. Thereby, the dependence is shown only with respect to one angle of inclination (one direction). The maximum amplitude A is shown on the vertical axis. As an example, but not limiting the invention, the angle on the horizontal axis is shown in units of minutes.

Fig. 3 also illustrates the determination of gain factors for predetermined inclinations. As shown in Fig. 2, the amplitude of the gain signal stays at its maximum amplitude A, when the distance 18 is greater than nearly 50 nm or when no storage medium 13 is present. Hence, the determination of the gain factors for predetermined inclinations is performed in a state, when no storage medium is present or when the distance 18 between the lens surface 12 of the lens element 11 and the surface 14 of the storage medium 13 is larger than a wavelength.

When the angle of inclination vanishes and the vectors 10, 15 are parallel to each other, then a maximum amplitude A is detected by the gap signal correcting unit 36 from the gap signal input over line 26. This results in a measured value 43 for an inclination of 0 minutes (0 degree). Then, the angle of inclination is increased to 7.5 minutes and the maximum amplitude A of the gap signal is measured. This results in a measured value 44 having a maximum amplitude A that is lower than the maximum amplitude A of measured value 43, because the tilt of the lens element 11 has a detrimental effect on the gap signal. Then, the inclination is further increased and two further measured values 45, 46 are determined. Thereafter, measured values 47, 48, 49 are determined for negative inclination angles. It may be noted that an angle of 30 minutes (= 0.5 degree) can have a substantial effect on the gap error signal. In order to obtain sufficiently large margins for disc tilt with respect to the flat side of the front surface 12 of the lens element 11 at small distances, the lens element 11 can have a conical or mesa shape with a small flat tip with a diameter of, for example, 40 μm. However, even when the closest surface of the lens element 11 is reduced in size from several millimeters to a few tens of microns, the diameter to distance ratio is still as large as 1,000 to 1. Therefore, even in such a case, the maximum tilt angle to maintain a distance 18 of 10 percent of the wavelength is very small, for example, 0.07 degree up to 0.28 degree for an optimized design of the lens element 11.

Further, it may be noted that the maximum amplitude A decreases strongly for an increasing absolute value of the angle of inclination, when beginning from an inclination of 0 minutes, and has a more gentle slope to the outside. But, the dependence of the maximum amplitude A of the gap signal depends on the specific optical pick-up and/or recording device 1 and can show remarkable differences to the graph shown in Fig. 3.

The gain factor for specific tilt angles is calculated by the gap signal correcting unit 36 from the measured values 43 to 49. The measured value 43 was determined for a vanishing tilt, that means both tilt angles are equal to 0 degree. Hence, the maximum out of the maximum amplitudes A equals 5 units, as shown in Fig. 3. For a first tilt angle of 45 minutes and a second tilt angle of 0 degree, a maximum amplitude A of 2 units was measured, as shown by measured value 46. Therefore, for this tilt the gain factor is determined to 5/2 = 2.5. More generally, the gain factor for one combination of tilt angles is calculated by the gap signal correcting unit 36 as a fraction value having a numerator that is the greatest of the maximum amplitudes A measured (or the maximum amplitude A measured for a vanishing tilt) and a denominator that is the maximum amplitude A measured for this combination of tilt angles.

Let the gap signal be a measured or pre-calculated function f(d, α, β) of the distance 18, the lens tilt angle α in a first direction and the lens tilt angle β in a second direction, wherein the distance 18 is denoted as d. When the first tilt angle α and the second tilt angle β are known, the gain factor K(α, β) is the ratio of the maximum magnitude of the gap signal at a very large gap (distance d) and the dependence of the gap signal on the lens tilt:

$$K(\alpha, \beta) = f(\infty, 0, 0) / f(\infty, \alpha, \beta).$$

.

Thereby, d = ∞ means that the distance 18 is larger than a wavelength or that no disc is present. The tilt angles α, β can be obtained from the moving mechanism 31 or another lens tilt controller. The amplified gap signal K(α, β) * f(d, α, β) is then independent of the lens tilt.

If the device 1 does not contain information about f(∞, α, β), then the device 1 itself can determine f (∞, α, β) by a measurement routine, as described with reference to Fig. 3. Therefore, the device 1 may contain a routine that tilts the lens in α, β and simultaneously measures the gap signal. The first angle α can be a lens tilt angle in a radial direction of the disc 13, and the second angle β can be a lens tilt angle in a tangential direction of the disc 13.

It may be noted that it is also possible, but with a decrease in accuracy, to measure and calculate within the evanescent decay distance. In this case, instead of the maximum amplitude the actual amplitude of the gap signal is used. The other gain factors corresponding to measured values 43 to 45 and 47 to 49 are calculated accordingly. For tilt angles between the measured values 43 to 49, the next nearest measured value can be used as an approximation. Further, it is possible to calculate a mean value or calculate a higher-order approximation. For a one-dimensional case, the mean value calculation is shown by the straight lines connecting the measured values 43 to 49.

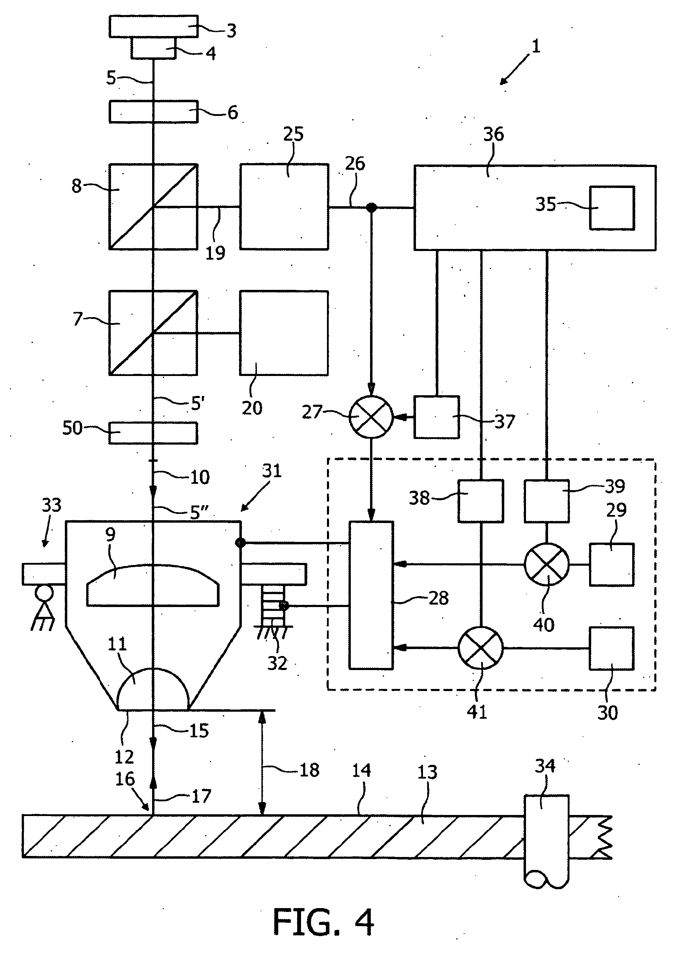

Fig. 4 shows an optical pick-up and/or recording device 1 according to a second embodiment of the present invention. In the optical pick-up and/or recording device 1 of the second embodiment, the radiation emitting element 3 is also adapted to output a radiation beam 5 having a linear polarization state. In difference to the first embodiment, this radiation beam 5 passes through a quarter wave plate 50, wherein the quarter wave plate 50 is arranged in the light path of the radiation beam 5 between the beam splitter 7 and the converging lens 9. The quarter wave plate 50 changes the polarization of the radiation beam 5 from the linear state to a circular state. The radiation beam 5" of circular polarization is then used to illuminate the converging lens 9 and the lens element 11. The reflected radiation beam reflected by frustrated total internal reflection also passes through the quarter wave plate 50. Hence, the reflected radiation beam 5' comprises a component 19 with a polarization state parallel to that of the initial polarization state of the radiation beam 5. At least a part of the component 19 is detected by the gap measuring unit 25. Compared with the first embodiment, the optical pick-up and/or recording device 1 according to the second embodiment has the advantage that the component carrying the read-out signal as detected by the data processing unit 20 has at least nearly the double intensity.

It is to be noted that the gap control unit 28, the memory elements 29, 30, 37, 38, 39, the amplifier 27, the multiplier elements 40, 41 and other elements of the optical pick-up and/or recording device 1 are not necessarily a part of an optical head and may be located on a main board or another part of the optical pick-up and/or recording device 1 as claimed.

Although an exemplary embodiment of the invention has been disclosed, it will be apparent to those skilled in the art that various changes and modifications can be made which will achieve some of the advantages of the invention without departing from the scope of the invention. Such modifications to the inventive concept are intended to be covered by the appended claims in which the reference signs shall not be construed as limiting the scope of the invention. Further, in the description and the appended claims the meaning of "comprising" is not to be understood as excluding other elements or steps. Further, "a" or "an" does not exclude a plurality, and a single processor or other unit may fulfill the functions of several means recited in the claims. Also, the wavelength of the radiation beam is not limited to the visible spectrum.

**Claims**

1. Optical pick-up and/or recording device (1), which optical pick-up and/or recording device comprises at least a lens element (11) having a numerical aperture larger than 1 and adapted to focus a radiation beam (5) on a storage medium (13), a moving mechanism (31) adapted to vary a distance (18) between a front surface (12) of said lens element (11) and a surface (14) of said storage medium (13) and adapted to vary an inclination of said front surface (12) of said lens element (11) relative to said surface (14) of said storage medium (14), a gap measuring unit (25) adapted to measure at least'indirectly said distance (18) between said front surface (12) of said lens element (11) and said surface (14) of said storage medium (13) and adapted to output a gap signal on the basis of said distance measured, a gap control unit (28) adapted to control said moving mechanism (31) on the basis of at least said gap signal, **characterised in that** said pick-up and/or recording device comprises additionally a gap signal correcting unit 36 adapted to correct for an effect on said gap signal caused by an inclination of said front surface (12) of said lens element (11) relative to a direction (10) of propagation of said radiation beam (5).

2. Optical pick-up and/or recording device according to claim 1, **characterized in that** said lens element (11) is a solid immersion lens.

3. Optical pick-up and/or recording device according to claim 1, **characterized in that** said gap measuring unit (25) is adapted to measure an amplitude of at least a component (19) of a reflected radiation beam (5') reflected by said lens element (11) due to a frustrated total internal reflection, wherein said component (19) has a specific polarization state.

4. Optical pick-up and/or recording device according to claim 3, **characterized in that** said gap measuring unit (25) measures a component (19) of said reflected radiation beam having a perpendicular polarization state with respect to said radiation beam (5) having a linear polarization state.

5. Optical pick-up and/or recording device according to claim 3, **characterized by** at least a quarter wave plate (50) arranged in a light path of said radiation beam and in a light path of said reflected radiation beam, wherein said quarter wave plate is adapted to change a polarization of said radiation beam from a linear state to a circular state, wherein said gap measuring unit (25) measures a component of said reflected radiation beam having a polarization state parallel to that of said linear polarization state of said radiation beam.

6. Optical pick-up and/or recording device according to one of claims 3 to 5, **characterized in that** said gap measuring unit (25) is adapted to generate said gap signal from a low frequency part of said component (19) of said reflected radiation beam (5').

7. Optical pick-up and/or recording device according to claim 1, **characterized in that** said gap signal correcting unit (36) is adapted to amplify said gap signal with a gain factor.

8. Optical pick-up and/or recording device according to claim 1, **characterized in that** said gap signal correcting unit (36) is equipped to adapt at least a preset value for said gap control unit (28).

9. Optical pick-up and/or recording device according to claim 8, **characterized in that** said gap signal correcting unit (36) is adapted to multiply at least a set point for said gap control unit (28) with a gain factor.

10. Optical pick-up and/or recording device according to claim 9, **characterized in that** said gap signal correcting unit (36) is adapted to multiply a gain value for said control unit with a reciprocal value of said gain factor.

11. Optical pick-up and/or recording device according to claim 7, 9 or 10, **characterized in that** said gain factor depends on at least a first tilt angle between said front surface (12) of said lens element (11) and a direction (10) of propagation of said radiation beam.

12. Optical pick-up and/or recording device according to claim 11, **characterized in that** said gain factor depends also on a second tilt angle between said front surface of said lens element and said optical axis of said radiation beam.

13. Optical pick-up and/or recording device according to claim 7, **characterized in that** said gain factor is determined with respect to predetermined inclinations of said front surface (12) of said lens element (11) relative to a direction of propagation of said radiation beam.

14. Optical pick-up and/or recording device according to claim 13, **characterized in that** said determination of said gain factors for predetermined inclinations is performed in a state, in which the distance between said front surface of said lens element and said surface of said storage medium (13) is not less than a wavelength of the radiation beam (5), or in a state, in which no storage medium (13) is present.

**Patentansprüche**

1. Optische Aufnahme- und/oder Aufzeichnungseinrichtung (1), wobei diese optische Aufbahne- und/oder Aufzeichnungseinrichtung wenigstens ein Linsenelement (11) mit einer Numerischen Apertur, die größer ist als 1 und vorgesehen zum Fokussieren eines Strahlungsbündels (5) auf ein Speichermedium (13), mit einem Bewegungsmechanismus (31) zum Variieren eines Abstandes (18) zwischen einer Vorderfläche (12) des genannten Linsenelementes (11) und einer Fläche (14) des genannten Speichermediums (13) und vorgesehen zum Variieren eines Neigungswinkels der genannten Vorderfläche (12) des genannten Linsenelementes (11) gegenüber der genannten Fläche (14) des genannten Speichermediums (13), mit einer Lückenmesseinheit (25) zum wenigstens indirekten Messen des genannten Abstandes (18) zwischen der genannten Vorderfläche (12) des genannten Linsenelementes (11) und der genannten Fläche (14) des genannten Speichermediums (13) und zum Liefern eines Lückensignals auf Basis des gemessenen Abstandes, mit einer Lückensteuereinheit (28) zur Steuerung des genannten Bewegungsmechanismus (31) auf Basis wenigstens des genannten Lückesignals, **dadurch gekennzeichnet, dass** die genannte Aufnahme- und/oder Aufzeichnungseinrichtung außerdem eine Lückensignalkorrektureinheit (36) zum Korrigieren eines Effektes auf das genannte Lückensignals, verursacht durch eine Neigung der genannten Vorderfläche (12) des genannten Linsenelementes (11) gegenüber einer der Fortpflanzungsrichtung (10) des genannten Strahlungsbündels aufweist.

2. Optische Aufnahme- und/oder Aufzeichnungseinrichtung nach Anspruch 1, **dadurch gekennzeichnet, dass** das genannte Linsenelement (11) eine "Solid Immersion Lens" (SIL) ist.

3. Optische Aufnahme- und/oder Aufzeichnungseinrichtung nach Anspruch 1, **dadurch gekennzeichnet, dass** die genannte Lückenmesseinheit (25) zum Messen einer Amplitude wenigstens eines Anteils (19) eines an dem genannten Linsenelement (11) durch eine frustrierte totale interne Reflexion verursachten reflektierten Strahlungsbündels (5') vorgesehen ist, wobei der genannte Anteil (19) einen bestimmten Polarisationszustand hat.

4. Optische Aufnahme- und/oder Aufzeichnungseinrichtung nach Anspruch 3, **dadurch gekennzeichnet, dass** die genannte Lückenmesseinheit (25) einen Anteil (19) des genannten reflektierten Strahlungsbündels mit einem senkrechten Polarisationszustand gegenüber dem genannten Strahlungsbündel (5) mit einem linearen Polarisationszustand misst.

5. Optische Aufnahme- und/oder Aufzeichnungseinrichtung nach Anspruch 3, **gekennzeichnet durch** wenigstens eine Viertelwellenplatte (50), die in einem Lichtweg des genannten Strahlungsbündels und in einem Lichtweg des genannten reflektierten Strahlungsbündels vorgesehen ist, wobei die genannte Viertelwellenplatte zum Ändern einer Polarisation des genannten Strahlungsbündels aus einem linearen Zustand in einen kreisförmigen Zustand vorgesehen ist, wobei die genannte Lückenmesseinheit (25) einen Anteil des genannten reflektierten Strahlungsbündels mit einem Polarisationszustand parallel zu dem des genannten linearen Polarisationszustandes des genannten Strahlungsbündels misst.

6. Optische Aufnahme- und/oder Aufzeichnungseinrichtung nach einem der Ansprüche 3 bis 5, **dadurch gekennzeichnet, dass** die genannte Lückenmesseinheit (25) zum Erzeugen des genannten Lückesignals aus einem NF-Teil des genannten Anteils (19) des genannten reflektierten Strahlungsbündels (5') vorgesehen ist.

7. Optische Aufnahme- und/oder Aufzeichnungseinrichtung nach Anspruch 1, **dadurch gekennzeichnet, dass** die genannte Lückensignalkorrektureinheit (36) zum Verstärkern des genannten Lückesignals um einen Verstärkungsfaktor vorgesehen ist.

8. Optische Aufnahme- und/oder Aufzeichnungseinrichtung nach Anspruch 1, **dadurch gekennzeichnet, dass** die genannte Lückensignalkorrektureinheit (36) zum Anpassen wenigstens eines voreingestellten Wertes für die genannte Lückensteuereinheit (28) vorgesehen ist.

9. Optische Aufnahme- und/oder Aufzeichnungseinrichtung nach Anspruch 8, **dadurch gekennzeichnet, dass** die genannte Lückensignalskorrektureinheit (36) zum Multiplizieren wenigstens eines Einstellpunktes für die genannte Lückensteuereinheit (28) mit einem Verstärkungsfaktor vorgesehen ist.

10. Optische Aufnahme- und/oder Aufzeichnungseinrichtung nach Anspruch 9, **dadurch gekennzeichnet, dass** die genannte Lückensignalkorrektureinheit (36) zum Multiplizieren eines Verstärkungswertes für die genannte Steuereinheit mit einem Reziprokwert des genannten Verstärkungsfaktors vorgesehen ist.

11. Optische Aufnahme- und/oder Aufzeichnungseinrichtung nach Anspruch 7, 9 oder 10, **dadurch gekennzeichnet, dass** der genannte Verstärkungsfaktor von wenigstens einem ersten Kippwinkel zwischen der genannten Vorderfläche (12) des genannten Linsenelementes (11) und einer Fortpflanzungsrichtung (10) des genannten Strahlungsbündels abhängig ist.

12. Optische Aufnahme- und/oder Aufzeichnungseinrichtung nach Anspruch 11. **dadurch gekennzeichnet, dass** der genannte Verstärkungsfaktor auch von einem zweiten Kippwinkel zwischen der genannten Vorderfläche des genannten Linsenelementes und der genannten optischen Achse des genannten Strahlungsbündels abhängig ist.

13. Optische Aufnahme- und/oder Aufzeichnungseinrichtung nach Anspruch 7, **dadurch gekennzeichnet, dass** der genannte Verstärkungsfaktor in Bezug auf vorbestimmte Neigungen der genannten Vorderfläche (12) des genannten Linsenelementes (11) gegenüber einer Fortpflanzungsrichtung des genannten Strahlungsbündels bestimmt wird.

14. Optische Aufnahme- und/oder Aufzeichnungseinrichtung nach Anspruch 13, **dadurch gekennzeichnet, dass** die genannte Bestimmung der genannten Verstärkungsfaktoren für vorbestimmte Neigungen in einem Zustand erfolgt, in dem der Abstand zwischen der genannten Vorderfläche des genannten Linsenelementes und der genannten Fläche des genannten Speichermediums (13) nicht größer ist als eine Wellenlänge des Strahlungsbündels (5), oder in einem Zustand erfolgt, in dem kein Speichermedium (13) vorhanden ist.

**Revendications**

1. Dispositif optique de prise et/ou d'enregistrement (1), lequel dispositif de prise et/ou d'enregistrement comprend au moins un élément de lentille (11) ayant une ouverture numérique qui est supérieure à 1 et étant adapté de manière à focaliser un faisceau de rayonnement (5) sur un support de stockage (13), un mécanisme mobile (31) qui est adapté de manière à faire varier une distance (18) comprise entre une surface avant (12) dudit élément de lentille (11) et une surface (14) dudit support de stockage (13) et qui est adapté de manière à faire varier une inclinaison de ladite surface avant (12) dudit élément de lentille (11) par rapport à ladite surface (14) dudit support de stockage (14), une unité de mesure d'espace (25) qui est adaptée de manière à mesurer au moins indirectement ladite distance (18) comprise entre ladite surface avant (12) dudit élément de lentille (11) et ladite surface (14) dudit support de stockage (13) et qui est adaptée de manière à produire un signal d'espace sur la base de ladite distance étant mesurée, une unité de commande d'espace (28) qui est adaptée de manière à commander ledit mécanisme mobile (31) sur la base d'au moins ledit signal d'espace, **caractérisé en ce que** ledit dispositif de prise et/ou d'enregistrement comprend en outre une unité de correction de signal d'espace (36) qui est adaptée de manière à corriger un effet sur ledit signal d'espace qui est causé par une inclinaison de ladite surface avant (12) dudit élément de lentille (11) par rapport à une direction (10) de propagation dudit faisceau de rayonnement (5).

2. Dispositif optique de prise et/ou d'enregistrement selon la revendication 1, **caractérisé en ce que** ledit élément de lentille (11) est un objectif solide à immersion.

3. Dispositif optique de prise et/ou d'enregistrement selon la revendication 1, **caractérisé en ce que** ladite unité de mesure d'espace (25) est adaptée de manière à mesurer une amplitude d'au moins une composante (19) d'un faisceau de rayonnement réfléchi (5') qui est réfléchi par ledit élément de lentille (11) du fait d'une réflexion interne totale frustrée où ladite composante (19) présente un état de polarisation.

4. Dispositif de prise et/ou d'enregistrement selon la revendication 3, **caractérisé en ce que** ladite unité de mesure d'espace (25) mesure une composante (19) dudit faisceau de rayonnement réfléchi ayant un état perpendiculaire de polarisation par rapport audit faisceau de rayonnement (5) ayant un état linéaire de polarisation.

5. Dispositif optique de prise et/ou d'enregistrement selon la revendication 3, **caractérisé par** au moins une plaque de quart d'onde (50) qui est agencée dans un trajet de lumière dudit faisceau de rayonnement et dans un trajet de lumière dudit faisceau de rayonnement réfléchi, dans lequel ladite plaque de quart d'onde est adaptée de manière à changer une polarisation dudit faisceau de rayonnement d'un état linéaire en un état circulaire dans lequel ladite unité de mesure d'espace (25) mesure une composante dudit faisceau de rayonnement réfléchi ayant un état de polarisation qui est parallèle à celui dudit état linéaire de polarisation dudit faisceau de rayonnement.

6. Dispositif optique de prise et/ou d'enregistrement selon l'une quelconque des revendications précédentes 3 à 5, **caractérisé en ce que** ladite unité de mesure d'espace (25) est adaptée de manière à générer ledit signal d'espace à partir d'une partie basse fréquence de ladite composante (19) dudit faisceau de rayonnement réfléchi (5').

7. Dispositif optique de prise et/ou d'enregistrement selon la revendication 1, **caractérisé en ce que** ladite unité de correction de signal d'espace (36) est adaptée de manière à amplifier ledit signal d'espace avec un facteur de gain.

8. Dispositif optique de prise et/ou d'enregistrement selon la revendication 1, **caractérisé en ce que** ladite unité de correction de signal d'espace (36) est équipée de manière à adapter au moins une valeur préréglée pour ladite unité de commande d'espace (28).

9. Dispositif optique de prise et/ou d'enregistrement selon la revendication 8, **caractérisé en ce que** ladite unité de correction de signal d'espace (36) est adaptée de manière à multiplier au moins un point de consigne pour ladite unité de commande d'espace (28) avec un facteur de gain.

10. Dispositif optique de prise et/ou d'enregistrement selon la revendication 9, **caractérisé en ce que** ladite unité de correction de signal d'espace (36) est adaptée de manière à multiplier une valeur de gain pour ladite unité de commande avec une valeur réciproque dudit facteur de gain.

11. Dispositif optique de prise et/ou d'enregistrement selon les revendications 7, 9 ou 10, **caractérisé en ce que** ledit facteur de gain dépend d'au moins un premier angle d'inclinaison entre ladite surface avant (12) dudit élément de lentille (11) et une direction (10) de propagation dudit faisceau de rayonnement.

12. Dispositif optique de prise et/ou d'enregistrement selon la revendication 11, **caractérisé en ce que** ledit facteur de gain dépend également d'un deuxième angle d'inclinaison entre ladite surface avant dudit élément de lentille et ledit axe optique dudit faisceau de rayonnement.

13. Dispositif optique de prise et/ou d'enregistrement selon la revendication 7, **caractérisé en ce que** ledit facteur de gain est déterminé par rapport à des inclinaisons prédéterminées de ladite surface avant (12) dudit élément de lentille (11) par rapport à une direction de propagation dudit faisceau de rayonnement.

14. Dispositif optique de prise et/ou d'enregistrement selon la revendication 13, **caractérisé en ce que** ladite détermination desdits facteurs de gain pour des inclinaisons prédéterminées est réalisée dans un état dans lequel la distance comprise entre ladite surface avant dudit élément de lentille et ladite surface dudit support de stockage (13) n'est pas inférieure à une longueur d'onde du faisceau de rayonnement (5) ou dans un état dans lequel pas de support de stockage (13) n'est présent.

FIG. 1

A

42

18

50 100 150

FIG. 2

A

43

47

48

44

49

45

46

1

-30 30

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1067536 A2

**Non-patent literature cited in the description**

- **F. ZIJP et al.** Optical Data Storage 2004. *Proceedings of SPIE,* 2004, vol. 5380, 209-223